(19) **Europäisches Patentamt**

**European Patent Office**

**Office européen des brevets**

(11) **EP 0 451 517 B1**

(12) **EUROPEAN PATENT SPECIFICATION**

(45) Date of publication and mention
of the grant of the patent:
**01.05.1996 Bulletin 1996/18**

(51) Int. Cl.⁶: **A61B 8/00**, G01S 15/89,
G10K 11/34, H03H 9/42

(21) Application number: **91103755.4**

(22) Date of filing: **12.03.1991**

(54) **Acoustic image acquisition**

Akustische Bilderfassung

Acquisition d'image acoustique

(84) Designated Contracting States:
**DE FR GB**

(30) Priority: **11.04.1990 US 508025**

(43) Date of publication of application:
**16.10.1991 Bulletin 1991/42**

(73) Proprietor: **Hewlett-Packard Company**
**Palo Alto, California 94304 (US)**

(72) Inventor: **Larson, John D., III**
**Palo Alto, CA 94301 (US)**

(74) Representative: **Schoppe, Fritz, Dipl.-Ing.**
**Patentanwalt,**
**Georg-Kalb-Strasse 9**
**D-82049 Pullach (DE)**

(56) References cited:
EP-A- 0 118 837          GB-A- 2 011 075
US-A- 4 116 229          US-A- 4 167 753
US-A- 4 340 872

## Description

This invention relates to processing of an acoustic signal arriving at a plurality of receivers and for compensating for a shift in time associated with receipt of this signal at various receivers.

Acoustical imaging uses ultrasonic signals, generally with frequencies in the 1-10MHz range, to provide images of adjacent objects by receipt of waves that are reflected from such objects or of waves that have been transmitted through or diffracted from such objects. One version of such imaging is two-dimensional echocardiography, which uses a reconstruction of objects from the echo waves reflected from each object in the path of the transmitted wave that is received by an array of receivers positioned adjacent to, but spaced apart from, the object.

Where a wave traveling in a first medium, having an acoustic impedance $Z_1 = \rho_1 v_1$ ($\rho_1$ and $v_1$ are mass density and propagation velocity, respectively, in medium no. 1) encounters a second medium at normal incidence, the incident wave will be partly reflected from this surface with an amplitude reflection coefficient given by $r = (Z_2 - Z_1)/(Z_2 + Z_1)$. This reflection will change with incidence angle. In the soft tissues of a human body, the reflection coefficient varies from -10dB (between fat and muscle) to about -23dB (between kidney and spleen). These correspond to low level reflections of less than 1% so that most of the acoustic energy is transmitted through the interface and is available for imaging structures that lie further from the transmitter. A relatively high magnitude reflection can take place at a bone/muscle interface, which has a reflection coefficient of about 40% (-4dB). In this instance, only about half the energy is transmitted and available for imaging deeper structures.

Another problem in acoustic imaging of relatively soft structures such as body organs and tissues is that propagation of a wave in any particular body organ or tissue has an associated attenuation with a strongly frequency dependent attenuation coefficient. That is, as a wave propagates in such a medium, its intensity I diminishes from its initial value $I_0$, as propagation distance z increases, according to the relation

$$I = I_0 \exp[-2\alpha z], \qquad (1)$$

where the attenuation coefficient $\alpha$ increases approximately linearly with temporal frequency f of the wave: $\alpha(f) = \alpha_0 + \alpha_1 f$ with $\alpha_1 = 0.1 - 1$ dB/cm-MHz. Thus, for example, a three MHz acoustic wave that has traveled 20cm through soft tissue has an intensity that is 60 dB (a factor of $10^{-6}$) below its initial intensity level; and if the frequency is increased to f = 10 MHz, this acoustic beam would be 200dB below its initial intensity level. For this reason, acoustic waves of lower frequency, of the order of 1-5 MHz, are used for imaging structures deep in the body and higher frequency acoustic waves, f = 10 MHz, are used for imaging structures close to a surface within the body.

The velocity of propagation of a wave with a nominal frequency of 1-10 MHz within the body ranges from $1.41 \times 10^5$ to $1.59 \times 10^5$ cm/sec for various body organs and is not strongly frequency dependent in this range. An average value for wave propagation velocity $v_b$ in the human body of $1.54 \times 10^5$ cm/sec is often used for modeling purposes. An exception to use of this average value is human bone, with a wave propagation velocity of $4.08 \times 10^5$ cm/sec and with a characteristic impedance that is about 5 times that of the soft organs and tissues within the human body.

Where two or more adjacent organs or tissue interfaces are acoustically imaged within a human body, if these objects lie at different distances from the source or transmitter of the wave, the reflected waves will arrive at the receiver at different times and possibly from different directions relative to a center line that defines the orientation of the array of signal receivers. This has at least two consequences. First, the incoming wave from any one object may not be planar and may arrive from a direction that defines a non-zero incidence angle relative to the receiver array. Second, two incoming waves produced by two spaced apart objects will generally arrive at different times, with different incidence angles and with different shapes for the incoming waves. Other workers in this field often call for dynamical focussing, whereby each receiver in the receiver array is given a variable time delay that is commensurate with the direction from which a given incoming wave arrives. If two such waves are separated sufficiently in time, one set of time delays associated with an array of receivers can be replaced by a second set of time delays in the time interval between arrival of the first incoming wave and arrival of the second incoming wave. This is discussed by Brookner in "Phased Array Radar," Scientific American (Jan., 1985) pp. 94-102.

An example of this approach is disclosed in U.S. Pat. No. 4,116,229, issued to Pering for acoustic imaging apparatus. A time delay associated with a given receiver or transceiver or transducer is decomposed into a first large time delay contribution set by a tap on a master delay line and a second, smaller incremental time delay that is controlled by a set of controllable switches. The total time delay includes the first and second contributions to time delay and the incremental time delays can be changed at a predetermined time by use of the switches. A similar idea is disclosed in U.S. Pat. No. 4,140,022, issued to Maslak, in which focussing occurs by adjusting the phases of the waves. A mixer, in which the phase of the local oscillator is varied, effects the focussing phase variation in the signal.

GB-A-2011075 discloses an ultrasonic imaging system for processing image signals having a linear array of transducer elements, time delay circuits, summing amplifiers for summing delayed echo signals from active receiving channels to generate a focused echo signal, a scan converter, sweep drivers and a cathode ray tube on the screen of which a sector image is displayed.

US-A-4,340,872 discloses a continuously variable delay line including a piezo-electric crystal having an input transducer and an output transducer. An input signal is converted to a surface acoustic wave for transmission across the surface of the crystal. A control signal applied to control electrodes attached to side surfaces of the crystal alters the longitudinal dimensional characteristic of the crystal and, thereby, controls the time delay between the input and the output.

Jones, in U.S. Pat. No. 3,869,693, discloses a beam scanner for a plane wave arriving at a non-zero incidence angle relative to a linear array (assumed vertical) of transducers. The transducers individually sense the arrival, at possibly different times, of the wave front. Each transducer is provided with a multi-component delay line that includes: (1) a first component that introduces a fixed time delay $\Delta t_1$ that progressively increases as one moves along the linear array from the topmost transducer to the bottommost transducer; (2) a first group of seven time delay components, each of which introduces the same time delay $\Delta t'_2$ which decreases as one moves from top to bottom, with $\Delta t'_2 \, \Delta t_1$; and (3) a second group of three time delay components that introduces time delays of $\Delta t''_2/2$, $\Delta t''_2/4$ and $\Delta t''_2/8$, respectively. The first and second groups of time delay components are used to provide a combined time delay, of amount given by the sum $\Delta t_c = M \, \Delta t'_2 + (m_1/2 + m_2/4 + m_3/8) \, \Delta t''_2$ (M = 0,1,2, ..., 7; $m_1$, $m_2$, $m_3$ each = 0 or 1 independently), for a signal arriving at a transducer. It appears that the combination time delay $\Delta t_c$ is to be combined the fixed time delay $\Delta t_1$ to obtain the net time delay introduced at a given transducer. The net time delay introduced at a given transducer is not continuous but has 64 discrete values, corresponding to the choices of the four integer coefficients M, $m_1$, $m_2$ and $m_3$ of the combination time delay $\Delta t_c$.

Time delay of a signal transmitted by a first transducer and received by a second transducer may be introduced by insertion of a piezoelectric element extending between the two transducers. In U.S. Pat. No. 3,537,039, issued to Schafft, an electrical field is applied transversely to control the time delay of torsional vibrations of the piezoelectric material that carry the signal from the first transducer to the second transducer.

In U.S. Pat. No. 4,342,971, issued to Alter, application of a transverse electrical field alters the length of the piezo-electric element inserted between the first and second transducers and provides a controllable time delay for a signal sent between the two transducers. This approach is also disclosed in U.S. Pat. No. 4,401,956, issued to Joshi. In all these patents, the variable time delay introduced by the electrical field applied to the piezoelectic element appears to be at most a few percent of the time delay associated with the piezoelectric element with no electrical field applied.

Where the means for providing time delay are explicitly disclosed in the prior art, these devices appear to be rather large and electronically complex so that only a modest number of receivers can be provided with variable time delays. Often, the means of providing such variable time delay is not disclosed.

In order to provide adequate sampling of an incoming wave for any incidence angle from 0° to 90°, the receivers in the array should be spaced apart by no more than one half the wave length corresponding to the central frequency of the incoming wave, according to the Nyquist theory of (under)sampling. If the central frequency is chosen to be f = 5 MHz and a propagation velocity of v = 1.54 x $10^5$ is assumed, the receiver-to-receiver spacing should be $\lambda/2 = v/2f = 154\mu m$ or smaller. A one-dimensional array having a modest number N = 100 such receivers would require that all these receivers be approximately linearly aligned and uniformly spaced along a distance of about 1.5 cm. For a two-dimensional array with N = $10^4$ such receivers, this many receivers would have to be positioned in a rectangle or similar figure of area approximately 2.25 $cm^2$. It is unlikely that this could be done for the receivers with variable time delay discussed in the previous literature.

What is needed is acoustic imaging apparatus that will allow introduction of controllable, variable time delay in the signal produced at each receiver and will allow a large number of such receivers to be positioned in a very small length or small area representing the receiver array. Such receivers should, preferably, also allow the time delay at any one receiver to be changed in a time of the order of microseconds or less in order to provide adequate discrimination between two incoming acoustic waves corresponding to two different objects to be imaged by the apparatus.

Summary of the Invention

These needs are met by apparatus that includes a plurality of signal receivers of very small size, each receiver having a time delay means connected thereto for introducing a separately determined time delay into the incoming signal received at that receiver and for changing the time delay at a predetermined time in a time interval of no more than one microsecond.

The time delay includes a large or coarse time delay contribution and a fine time delay contribution, where one coarse time delay may serve a plurality of receivers and can be changed at a predetermined time. Each fine time delay is specific to one or a few receivers and can also be changed at a predetermined time independently of the time at which the coarse time delay contribution is changed. The time delayed signals from the receivers are received by a signal summation means that forms the sum of such signals, and a signal detector receives this sum and presents it as an electrical signal in some form, for example, as a graph on a screen of a cathode ray terminal. The fine time delay at a given receiver may be produced by propagating the signal received thereat through a length of piezoelectric crystal that has a pair of electrical/mechanical energy transducers positioned at two longitudinal ends of the transducer.

Two parallel electrodes are positioned on a pair of side surfaces of the crystal to provide a transverse electrical field whose instantaneous transverse electric field intensity determines the velocity of propagation of a piezoelectrically produced mechanical wave that travels from one transducer to the other transducer. The electrical field intensity produced by the two electrodes can be changed in a time of the order of one microsecond so that the fine time delay introduced into the signal received at this receiver can be changed quickly and controllably. Each piezoelectric crystal may have a transverse width or distance between the two electrodes of the order of 200 micrometers or less so that establishment of a new electric field intensity within the crystal is easily attained in a time interval of the order of one microsecond. The spacing of adjacent receivers, whether arranged in a one-dimensional array or in a two-dimensional array, is $\lambda/2$ or less, where $\lambda$ is the wavelength associated with the central frequency of the incoming acoustic wave.

Brief Description of the Drawings

Fig. 1 is a plan view of the overall arrangement of the invention in a one-dimensional embodiment.

Fig. 2 is a plan view of the time delay means in Fig. 1 according to one embodiment of the invention.

Fig. 3 is a schematic view illustrating a wave sweeping across a planar array of receivers at an incidence angle close to $\theta = 90°$.

Fig. 4 is a plan view of the time delay means in Fig. 1 according to another embodiment of the invention.

Best Mode for Carrying Out the Invention

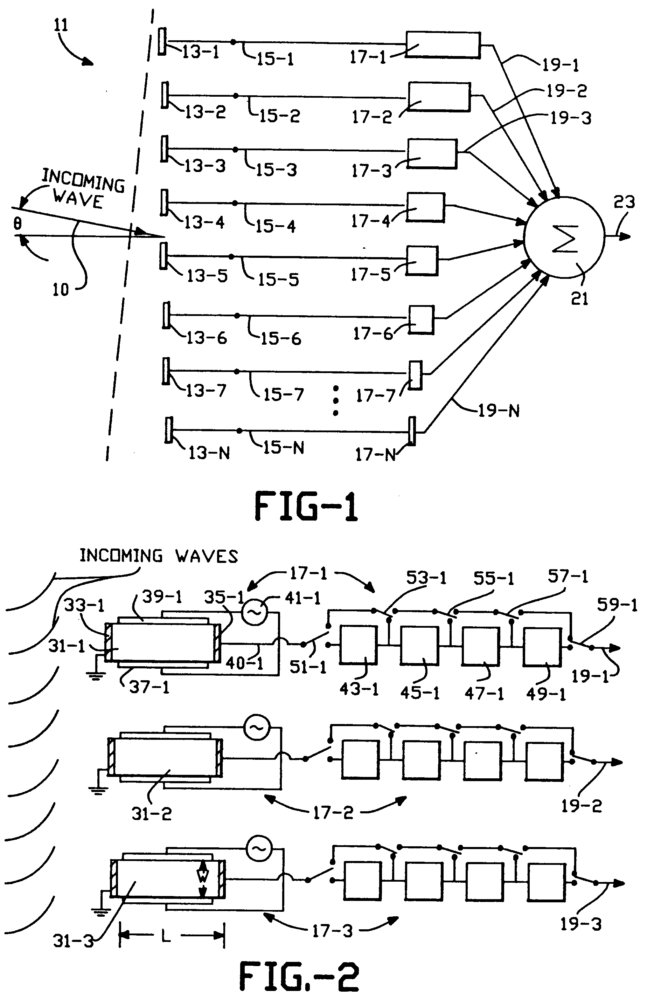

With reference to Fig. 1, a plane wave 10 arrives at the receiver apparatus 11 at an incidence angle $\theta$ relative to a plane containing a one-dimensional array of receivers 13-i ($i = 1, 2, 3, \cdot \cdot \cdot, N$). The one-dimensional array of receivers 13-i can be linearly aligned or can be aligned along a curve laying in a plane. Each receiver 13-i first receives a signal indicating that an incoming acoustic wave is present at a time $t_i$, with the times of arrival being such that $t_1 < t_2 < t_3 < \cdot \cdot \cdot < t_N$. The signal received at a receiver 13-i is sent on a first transport line 15-i to a time delay module 17-i that can introduce a time delay in the arriving signal of as much as $\Delta T_d = t_N - t_1$. The maximum time delay $\Delta T_d$ is the same for each of the time delay modules 17-i.

Each time delay module 17-i can introduce an independent time delay $\Delta t$ satisfying $0 < \Delta t < \Delta T_d$. The time delays introduced at the time delay modules 17-i may be such that the received signal emitted by each of the time delay modules issues at substantially the same time so that the initial difference in time $t_j - t_i$ ($i < j$) is exactly compensated for by the respective time delays introduced by the time delay modules 17-i and 17-j. The signal received by the time delay modules 17-i, with the appropriate time delay introduced, is then issued on a second transport line 19-i; and the collection of signals carried on the transport lines 19-1, 19-2, 19-3, $\cdot \cdot \cdot$, 19-N is received at a signal summation and detection device 21 that sums these signals and produces an electrical signal representing this sum. This sum signal is then issued on a third transport line 23 for subsequent processing or presentation graphically or numerically.

Each time delay module 17-i ($i = 1, 2, 3, \cdot \cdot \cdot, N$) in Fig. 1 introduces a coarse or large increment of time delay $\Delta t_L$ and a fine or small increment of time delay $\Delta t_S$ according to the invention, where $\Delta t_L$ is approximately a multiple of 50 nsec and $\Delta t_S$ is defined on a continuum (assumes a continuous range of values) or is approximately a multiple of a small time unit such as 1 nsec.

Fig. 2 illustrates one embodiment of three of the time delay modules 17-1, 17-2 and 17-3. The time delay module 17-1 includes a piezoelectric crystal 31-1, preferably of rectangular shape with longitudinal length L and transverse width W, with two signal electrodes 33-1 and 35-1 positioned at two longitudinal ends of the crystal 31-1. Two control electrodes 37-1 and 39-1 are positioned at two transverse faces of the crystal so that these electrodes are spaced apart and approximately parallel and facing one another. The two control electrodes 37-1 and 39-1 are connected by a variable voltage source 41-1 so that the voltage difference (up to 300 volts) between the two electrodes can be quickly changed in a time interval of the order of one microsecond and then held at a constant voltage difference level for a certain interval of time to cause a prescribed time delay. The first signal electrode 33-1 is grounded and the second signal electrode 35-1 is connected to an internal transport line 40-1 at one end and to a first switch 51-1 at the other end of the line 40-1. The piezoelectric crystal 31-1, the signal electrodes 33-1 and 35-1, the two control electrodes 37-1 and 39-1, the variable voltage source 41-1 and the output line 40-1 together make up the portion of the time delay module 17-1 that provides a fine or small increment time delay. The other time delay modules 17-2, 17-3, $\cdot \cdot \cdot$, 17-N are similarly constructed. If a non-zero electrical field is imposed on the crystal 31-1 in a transverse direction, the velocity of propagation of an acoustic wave within the crystal in a longitudinal direction will be changed by an amount that is approximately proportional to the strength of the transverse electrical field, including the polarity of the electrical field. Table 1 sets forth some of the relevant piezoelectric parameters for different piezoelectric crystals that are available today. Suitable materials include lead zirconate titanate, lead titanate and other ferroelectric ceramic materials known to those with skill in the art that exhibit piezoelectricity with a velocity of sound that is voltage-dependent.

Table I

| Relevant Piezoelectric Crystal Parameter | | | | | |
|---|---|---|---|---|---|
| Crystal Parameter | Clevite Ceramic B | Clevite PZT-4 | Clevite PZT-5A | Clevite PZT-5H | Clevite PZT-8 |
| Density ($\rho$) in gm/cm$^3$ | 5.55 | 7.5 | 7.75 | 7.5 | 7.6 |
| Prop. Velocity(v) at 0 psi in km/sec | 4.45 | 2.93 | 2.62 | 2.54 | 3.08 |
| Fractional Change of Prop. Velocity at p=1000 psi | -.0085 | -.0085 | -.052 | - | - |
| Fractional Change of Prop. Velocity at p=2000 psi | -.0183 | -.0183 | -.082 | - | - |
| Bulk Compliance ($s_{11}^E$) in M-sec$^2$/Kgm | $9.1 \times 10^{-12}$ | $15.5 \times 10^{-12}$ | $18.8 \times 10^{-12}$ | $20.7 \times 10^{-12}$ | $13.9 \times 10^{-12}$ |
| Bulk Compliance ($s_{33}^E$) in M-sec$^2$/Kgm | $8.6 \times 10^{-12}$ | $12.3 \times 10^{-12}$ | $16.4 \times 10^{-12}$ | $16.5 \times 10^{-12}$ | $11.1 \times 10^{-12}$ |

The velocity of longitudinal wave propagation in a piezoelectric crystal with transverse poling is given by

$$v = (\rho S_{11}^E)^{-\frac{1}{2}}. \qquad (2)$$

The phase shift experienced by a wave at frequency f as it propagates longitudinally a distance L through the crystal is given by $\phi$ (in degrees) = -360° (fL/v). The fractional change in phase shift $\phi$ with a change in the wave and crystal variables f, L and v becomes

$$\Delta\phi/\phi = \Delta f/f + \Delta L/L - \Delta v/v. \qquad (3)$$

For a nominal propagating velocity in the PZT-5A ceramic of approximately v = 3 Km/sec, a bar length of 0.176 cm (assumed fixed), and a signal frequency of f = 5 MHz, a wave propagating in the medium at p = 1000 psi, which is about 6.9 MPa, experiences a total phase of $\phi$ = 1056°. A pressure change $\Delta$p = 2000 psi (about 13.8 MPa) produces a fractional bulk compliance shift of -0.17, which corresponds to a fractional phase shift change of

$$\Delta\phi/\phi = - \Delta v/v = S_{11}^E/2S_{11}^E = 0.085. \qquad (4)$$

The stress T required to produce the required change $S_{11}^E$ is T = 1.38 x 10$^8$ Newtons/M$^2$. The electric field strength required to produce the required change in $S_{11}^E$ is then

$$E_1 = S_{11}^E T/d_{31} \qquad (5)$$

$$= -(18.8 \times 10^{-12})(1.38 \times 10^7)/(1.71 \times 10^{-10})$$

$$= 1.51 \times 10^4 \text{ volts/cm}.$$

The corresponding voltage difference across the crystal of width W = .0127 cm becomes

$$V = E_1 W = 193 \text{ volts}. \qquad (6)$$

This corresponds to a 90 degree change in phase shift and a voltage sensitivity factor of

$$\frac{\Delta\phi}{\Delta V} = 0.47 \text{ degrees/volt}. \qquad (7)$$

The phase shift change, or equivalently the time delay, introduced in a wave that travels the length of a piezoelectric crystal can thus be controlled using an applied voltage difference between the two electrodes. The maximum associated time delay for an approximate propagation velocity of v = 3 x 10$^5$ cm/sec and a length of L = 0.176 cm for the voltage difference of 193 volts is

$$(\Delta t)_{max} = \left(\frac{L}{v}\right)\left(\frac{-\Delta v}{v}\right)/\left(1 + \frac{\Delta v}{v}\right) = 52 \text{ nsec.} \qquad (8)$$

The actual time delay $\Delta_t$ may be varied continuously and approximately linearly from 0 to 50 nsec by varying the voltage difference between the electrodes.

The total time delay of the module 17 may then consist of a fine scale or small contribution $\Delta t_S$ ($0 \leq \Delta t_s \leq 50$ nsec) plus a coarse scale or large contribution $\Delta t_L$, where $\Delta t_L$ is an integral multiple M $\Delta t_C$ (M = 0, 1, 2, $\cdot$ $\cdot$ $\cdot$) of a time delay $\Delta t_C$ of some convenient size such as 25 nsec or 50 nsec. The upper limit for $\Delta t_S$ may be made any time interval within reason by appropriate choice of the crystal material (and thus propagation velocity v) and of the crystal length L. The resolution of the fine scale time delay may be one nsec, or even smaller if desired.

If the wave propagation velocity in the body is taken to be $v_b = 1.54 \times 10^5$ cm/sec, a frequency of f = 5 MHz will produce an associated wavelength of $\lambda = 308$ $\mu$m, as noted above. If the element-to-element spacing on the array of receivers is a = $\lambda/2 = 154$ $\mu$m, a wave front moving approximately parallel to a plane containing the array of receivers will require a time interval of approximately

$$(\Delta t_{sp})_{max} = a/v = 1/2f = 100 \text{ nsec} \qquad (9)$$

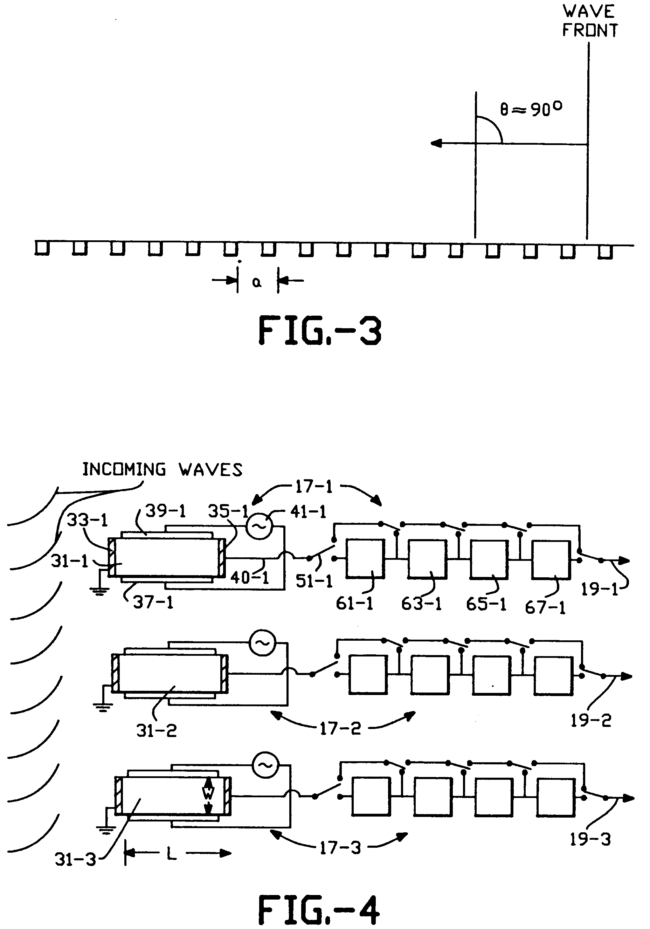

to move from one receiver to an adjacent receiver, and this orientation corresponds to a wave incidence angle of 90° as illustrated in Fig. 3. More generally, for an incidence angle of $\theta$ ($0 \leq \theta \leq 90°$) the time interval length $\Delta t_{sp}$ will become

$$\Delta t_{sp} = (1/2f) \sin \theta \qquad (10)$$

so that the choice $\theta = 30°$ will produce a time interval length $\Delta t_{sp} = 50$ nsec.

Where longitudinal poling, rather than transverse poling, is used in a piezoelectric crystal, the velocity of wave propagation becomes

$$v = (\rho S_{33}{}^E)^{-1/2} \qquad (11)$$

The fractional phase shift for a pressure change $\Delta \rho$ =2000psi, given in Eq. (4), is unchanged, and the electric field strength $E_1$ required to produce the change in $S_{33}{}^E$ becomes

$$E_1 = S_{33}{}^E T/d_{31} = 1.32 \times 10^4 \text{volts/cm.} \qquad (12)$$

The corresponding voltage difference V across the crystal and the voltage sensitivity become

$$V = E_1 W = 167 \text{ volts,} \qquad (13)$$

$$\frac{\Delta \phi}{\Delta V} = 0.54 \text{ degrees/volt,} \qquad (14)$$

for the transverse polling situation. The maximum time delay $(\Delta t)_{max}$ given in Eq. (9) remains unchanged at 52 nsec.

A small group of N adjacent or consecutive receivers will have associated time delays $t_1$, $t_2$, $\cdot$ $\cdot$ $\cdot$, $t_N$ that can be expressed as

$$\Delta t_i = (\Delta t_S)_i + (\Delta t_L)_i \qquad$$

where

$$(\Delta t_L)_1 = (\Delta t_L)_2 = \cdots = (\Delta t_L)_N.$$

Otherwise stated, a group of adjacent or consecutive receivers may be chosen for which the coarse scale time delay contributions $\Delta t_L$ are all the same and the receiver time delays differ, if at all, only in the small scale contribution to time delay, $\Delta t_S$. In Fig. 2 with N = 3, this would be implemented by tying together: the switch 51-1 in the module 17-1 corresponding switches in modules 17-2 and 17-3; the switch 53-1 in module 17-1 and the corresponding switches in the modules 17-2 and 17-3; the switch 55-1 in the module 17-1 and the corresponding switches in modules 17-2 and 17-3; the switch 57-1 in module 17-1 and the corresponding switches in modules 17-2 and 17-3; and the switch 59-1 in module 17-1 and the corresponding switches in modules 17-2 and 17-3. Each of the coarse time delay devices 43-1, 45-1, 47-1 and 49-1 could be arranged to introduce a basic coarse time delay $\Delta t_c$, which could be 50 nsec, 100 nsec, 150 nsec or some other convenient number. The total coarse time delay would then be an integral multiple N $\Delta t_c$ of this basic

coarse time delay $\Delta t_c$. The fine scale time delay $\Delta t_S$ for the signals propagating on the signal lines 19-1, 19-2 and 19-3 would then be introduced by the respective piezoelectric crystals 31-1, 31-2 and 31-3 and associated electrode pairs.

Alternatively, as shown in Fig. 4, the coarse time delay sub-modules 61-1, 63-1, 65-1 and 67-1 could introduce respective coarse time delays of $\Delta t_c$, 2 $\Delta t_c$, 4 $\Delta t_c$ and 8 $\Delta t_c$ so that the total coarse time delay for the system becomes

$$\Delta t_L = \frac{n}{2^N} \Delta t_c \ (n = 0, 1, 2, \cdots, 2^N\text{-}1),$$

with N = 4 in Fig. 4.

The control voltages applied could be arranged in digital steps in a binary fashion, or could be applied as a continuous analog control. The coarse time delay modules shown in Figs. 2 and 4 may each be a piezoelectric element with a transducer at each end, or may be some other device that introduces a fixed time delay into signal propagation.

## Claims

1. Apparatus for receiving and processing an incoming broadband acoustic signal, the apparatus comprising:

   an array of two or more signal receivers (13), arranged in an array so that each receiver receives and senses the incoming signal (10) representing an image;

   time delay means (17) connected to each of the signal receivers (13), for introducing a separately determined time delay into the incoming signal received at each signal receiver and for changing a time delay, at a predetermined time after an incoming signal (10) is received at the corresponding signal receiver, where the time delay for each receiver is determined by the relative position of the receiver in the array of receivers;

   signal summation means (21) connected to the time delay means (17), for receiving each of the plurality of incoming signals (19) with separately determined time delays introduced therein and for forming the sum of such signals; and

   a signal detector (21) connected to the signal summation means, for receiving the sum of the signals and for detecting this sum and presenting the sum as an electrical signal, characterized in that the time delay means introduces a controlled large time delay $\Delta t_L = M \Delta t_c$ (M = 0, 1, 2, $\cdot \ \cdot \ \cdot$ ), where $\Delta t_c$ is a predetermined time increment, plus a continuously variable small time delay $\Delta t_S$ that satisfies $0 \leq \Delta t_S \leq (\Delta t_S)_{max}$ .

2. Apparatus according to claim 1, wherein said array of said signal receivers (13) is a one-dimensional array of said receivers arranged approximately in a straight line, with the spacing of any two adjacent receivers being approximately the same.

3. Apparatus according to claim 2, wherein said spacing a of said two adjacent signal receivers (13) is determined approximately by a = v/2f , where v is the velocity of propagation of said incoming signal before said incoming signal arrives at said signal receivers.

4. Apparatus according to claim 1, wherein said array of said signal receivers (13) is a two-dimensional planar array, with the plane of said array having a two-dimensional Cartesian coordinate system (x,y), with at least one group of said signal receivers being positioned along a line x = constant in the plane and at least a second group of said signal receivers being positioned along a line y = constant in the plane.

5. Apparatus according to claim 4, wherein the spacing of any two adjacent signal receivers (13) on one of said lines x = constant is approximately the same.

6. Apparatus according to claim 4, wherein said spacing a of said two adjacent signal receivers (13) on one of said lines x = constant is determined approximately by a = v/2f , where v is the velocity of propagation of said incoming signal before said incoming signal arrives at said signal receivers.

7. Apparatus according to claim 1, wherein said time delay means comprises:

   a plurality of piezoelectric crystals (31) with voltage-dependent velocity of sound, one such crystal being connected to each of said signal receivers (13) and all such crystals having approximately the same length $L_1$ in a first crystal direction;

   first and second transducers (33, 35) for each crystal for converting an acoustical signal to an electrical signal and converting an electrical signal to an acoustical signal, the two transducers being positioned at opposite ends of the crystal along a line in the crystal oriented in a first crystal direction, where an incoming acoustical signal (10) is received at the first transducer, propagates the length $L_1$ of the crystal in the first crystal direction and is received at and issued by the second transducer;

   first and second electrodes (37, 39) for each crystal for controlling the small time delay $\Delta t_s$ associated with

propagation of a signal from one end of the crystal to the other end in the first crystal direction, with the first electrode and the second electrode being positioned on opposite sides of the crystal along a line oriented in a second crystal direction that is approximately perpendicular to the first crystal direction;

a voltage source (41) of variable voltage connected between the first and second electrodes to controllably vary the voltage therebetween as a function of time; and

a plurality of coarse time delay means (43, 45, 47, 49), one such means being associated with each piezo-electric crystal and being connected to the first transducer or to the second transducer of the associated crystal, for receiving said incoming signal and for introducing said controllable large time delay of $\Delta t_L = M \Delta t_c$.

8. Apparatus according to claim 7, wherein said piezoelectric crystal material (31) is a ferroelectric ceramic.

9. Apparatus according to claim 8, wherein said ferroelectric ceramic material (31) is drawn from the class consisting of lead zirconate titanate and lead titanate.

10. Apparatus according to claim 1, wherein said large time delay $\Delta t_L$ is approximately an integer multiple of 50 nsec and said small time delay ($\Delta t_S$) is no less than one nsec.

11. Time delay apparatus for introducing a time delay between two or more acoustic signals propagating along separate signal paths, the apparatus comprising:

a plurality of piezoelectric crystals (31) with voltage-dependent velocity of sound, one such crystal being connected to each of the signal paths and all such crystals having approximately the same length $L_1$ in a first crystal direction;

first and second transducers (33, 35) for each crystal for converting an acoustical signal to an electrical signal and converting an electrical signal to an acoustical signal, with the two transducers being positioned at opposite ends of the crystal along a line in the crystal oriented in a first crystal direction, where an incoming acoustical signal (10) is received at the first transducer, propagates the length $L_1$ of the crystal in the first crystal direction and is received at and issued by the second transducer;

first and second electrodes (37, 39) for each crystal for controlling a small time delay associated with propagation of a signal from one end of the crystal to the other end in a first crystal direction, with the first electrode and the second electrode being positioned on opposite sides of the crystal along a line in the crystal oriented in a second crystal direction that is approximately perpendicular to the first crystal direction;

a voltage source (41) of variable voltage connected between the first and second electrodes to controllably vary the voltage therebetween as a function of time; and

a plurality of coarse time delay means (43, 45, 47, 49), one such means being associated with each piezo-electric crystal and being connected to the first transducer or to the second transducer of the associated crystal, for receiving said incoming signal and for introducing a controllable large time delay of $\Delta t_L = M \Delta t_c$, where M is a non-negative integer and $\Delta t_c$ is a predetermined time increment.

12. Apparatus according to claim 11, wherein said piezoelectric crystal material (31) is a ferroelectric ceramic.

13. Apparatus according to claim 12, wherein said ferroelectric ceramic material (31) is drawn from the class consisting of lead zirconate titanate and lead titanate.

14. A method for receiving and processing an incoming broad band acoustic signal, the method comprising the steps of:

providing an array of two or more receivers (13), arranged in an array so that each receiver receives and senses the incoming signal (10) representing an image;

introducing a separately determined and controllable time delay (17) into the image signal received at each receiver, where the time delay is determined by the relative position of a receiver in the array of receivers; and

providing signal summation means (21) for receiving each of the time delay incoming signals and for forming and issuing the sum of these signals as an electrical signal; characterized in that the time delay

consists of a sum of a large time delay increment $\Delta t_L = M \Delta t_c$ (M = 0,1,2, $\cdots$), where $\Delta t_c$ is a predeter-mined time increment, plus a continuously variable small time delay increment $\Delta t_s$ that satisfies $0 \leq \Delta t_s \leq (\Delta t_s)_{max}$.

**Patentansprüche**

1. Vorrichtung zum Empfangen und Verarbeiten eines ankommenden akustischen Breitbandsignals, wobei die Vorrichtung folgende Merkmale aufweist:

ein Array von zwei oder mehr Signalempfängern (13), die in einem Array angeordnet sind, so daß jeder Empfänger das ankommende Signal (10), das ein Bild darstellt, empfängt und erfaßt;

eine Zeitverzögerungseinrichtung (17), die mit jedem der Signalempfänger (13) verbunden ist, um eine getrennt bestimmte Zeitverzögerung in das ankommende Signal einzufügen, das an jedem Signalempfänger empfangen wird, und um eine Zeitverzögerung zu einem vorbestimmten Zeitpunkt, nachdem ein ankommendes Signal (10) an dem entsprechenden Signalempfänger empfangen ist, zu verändern, wobei die Zeitverzögerung für jeden Empfänger durch die relative Position des Empfängers in dem Array der Empfänger bestimmt ist;

eine Signalsummierungseinrichtung (21), die mit der Zeitverzögerungseinrichtung (17) verbunden ist, um jedes der Mehrzahl der ankommenden Signale (19) mit getrennt bestimmten Zeitverzögerungen, die in dieses eingefügt sind, zu empfangen, und um die Summe dieser Signale zu bilden; und

einen Signaldetektor (21), der mit der Signalsummierungseinrichtung verbunden ist, um die Summe der Signale zu empfangen, und um diese Summe zu erfassen, und um die Summe als ein elektrisches Signal darzustellen, dadurch gekennzeichnet,

daß die Zeitverzögerungseinrichtung eine gesteuerte große Zeitverzögerung $\Delta t_L = M\, \Delta t_C$ ($M = 0, 1, 2, ...$), wobei $\Delta t_C$ ein vorbestimmtes Zeitinkrement ist, plus eine kontinuierlich veränderbare kleine Zeitverzögerung $\Delta t_S$, die die Bedingung $0 \leq \Delta t_S \leq (\Delta t_S)_{max}$ erfüllt, einfügt.

2. Vorrichtung nach Anspruch 1, bei der das Array der Signalempfänger (13) ein eindimensionales Array der Empfänger ist, die etwa in einer geraden Linie angeordnet sind, wobei die Beabstandung von jeweils zwei benachbarten Empfängern etwa dieselbe ist.

3. Vorrichtung gemäß Anspruch 2, bei der die Beabstandung a der zwei benachbarten Signalempfänger (13) ungefähr durch $a = v/2f$ bestimmt ist, wobei v die Geschwindigkeit der Ausbreitung des ankommenden Signals ist, bevor das ankommende Signal an den Signalempfängern ankommt.

4. Vorrichtung gemäß Anspruch 1, bei der das Array von Signalempfängern (13) ein zweidimensionales, planares Array ist, wobei die Ebene des Arrays ein zweidimensionales karthesisches Koordinatensystem (x, y) hat, wobei zumindest eine Gruppe der Signalempfänger entlang einer Linie x = konstant in der Ebene angeordnet ist, und wobei zumindest eine zweite Gruppe der Signalempfänger entlang einer Linie y = konstant in der Ebene angeordnet ist.

5. Vorrichtung nach Anspruch 4, bei der die Beabstandung von zwei beliebigen benachbarten Signalempfängern (13) auf einer der Linien x = konstant etwa dieselbe ist.

6. Vorrichtung gemaß Anspruch 4, bei der die Beabstandung (a) der zwei benachbarten Empfänger (13) auf einer der Linien x = konstant etwa durch $a = v/2f$ bestimmt ist, wobei v die Geschwindigkeit der Ausbreitung des ankommenden Signals ist, bevor das ankommende Signal an den Signalempfängern ankommt.

7. Vorrichtung gemäß Anspruch 1, bei der die Zeitverzögerungseinrichtung folgende Merkmale umfaßt:
eine Mehrzahl von piezoelektrischen Kristallen (31) mit spannungsabhängiger Schallgeschwindigkeit, wobei ein solcher Kristall mit jedem der Signalempfänger (13) verbunden ist, wobei alle diese Kristalle nahezu dieselbe Länge $L_1$ in eine erste Kristallrichtung haben;

einen ersten und einen zweiten Wandler (33, 35) für jeden Kristall, um ein akustisches Signal in ein elektrisches Signal umzuwandeln, und um ein elektrisches Signal in ein akustisches Signal umzuwandeln, wobei die zwei Wandler an entgegengesetzten Enden des Kristalls entlang einer Linie in dem Kristall, die in eine erste Kristallrichtung ausgerichtet ist, angeordnet sind, wobei ein ankommendes akustisches Signal (10) an dem ersten Wandler empfangen wird, sich entlang der Länge ($L_1$) des Kristalls in die erste Kristallrichtung ausbreitet und an dem zweiten Wandler empfangen wird und durch diesen ausgegeben wird;

eine erste und eine zweite Elektrode (37, 39) für jeden Kristall, um die kleine Zeitverzögerung ($\Delta t_S$) zu steuern, die der Ausbreitung eines Signals von einem Ende des Kristalls zum anderen Ende in die erste Kristallrichtung zugeordnet ist, wobei die erste Elektrode und die zweite Elektrode an entgegengesetzten Enden des Kristalls entlang einer Linie, die in eine zweite Kristallrichtung, die etwa senkrecht zu der ersten Kristallrichtung ist, ausgerichtet ist, angeordnet sind;

eine Spannungsquelle (41) mit variabler Spannung, die zwischen die erste und die zweite Elektrode geschaltet ist, um die Spannung zwischen diesen als eine Funktion der Zeit steuerbar zu verändern; und

eine Mehrzahl von groben Zeitverzögerungseinrichtungen (43, 45, 47, 49), wobei eine solche Einrichtung jedem piezoelektrischen Kristall zugeordnet ist und mit dem ersten Wandler oder dem zweiten Wandler des zugeordneten Kristalls verbunden ist, um das ankommende Signal zu empfangen und um die steuerbare große Zeitverzögerung $\Delta t_L = M\, \Delta t_C$ einzufügen.

8. Vorrichtung gemäß Anspruch 7, bei der das piezoelektrische Kristallmaterial (31) eine ferroelektrische Keramik ist.

9. Vorrichtung gemäß Anspruch 8, bei das ferromagnetische Keramikmaterial (31) aus der Klasse ist, die aus Bleizirkonattitanat und Bleititanat besteht.

10. Vorrichtung gemäß Anspruch 1, bei der die große Zeitverzögerung $\Delta t_L$ etwa ein ganzzahliges Mehrfaches von 50 nsek ist, und bei der die kleine Zeitverzögerung ($\Delta t_S$) nicht kleiner als 1 nsek ist.

11. Zeitverzögerungsvorrichtung zum Einfügen einer Zeitverzögerung zwischen zwei oder mehr akustische Signale, die sich entlang getrennter Signalwege ausbreiten, wobei die Vorrichtung folgende Merkmale aufweist:
eine Mehrzahl von piezoelektrischen Kristallen (31) mit einer spannungsabhängigen Schallgeschwindigkeit, wobei ein solcher Kristall mit jedem der Signalwege verbunden ist, und alle diese Kristalle etwa dieselbe Länge $L_1$ in einer ersten Kristallrichtung haben;
einen ersten und einen zweiten Wandler (33, 35) für jeden Kristall, um ein akustisches Signal in ein elektrisches Signal umzuwandeln, und um ein elektrisches Signal in ein akustisches Signal umzuwandeln, wobei die zwei Wandler an entgegengesetzten Endes des Kristalls entlang einer Linie in dem Kristall, die in eine erste Kristallrichtung ausgerichtet ist, angeordnet sind, wobei ein ankommendes akustisches Signal (10) an dem ersten Wandler empfangen wird, sich entlang der Länge $L_1$ des Kristalls in der ersten Kristallrichtung ausbreitet und an dem zweiten Wandler empfangen wird und durch diesen ausgegeben wird;
eine erste und eine zweite Elektrode (37, 39) für jeden Kristall, um eine kleine Zeitverzögerung zu steuern, die der Ausbreitung eines Signals von einem Ende des Kristalls zum anderen Ende in eine erste Kristallrichtung zugeordnet ist, wobei die erste Elektrode und die zweite Elektrode an entgegengesetzten Seiten des Kristalls entlang einer Linie in dem Kristall, die in eine zweite Kristallrichtung, die etwa senkrecht zu der ersten Kristallrichtung ist, ausgerichtet ist, angeordnet sind;
eine Spannungsquelle (41) mit variabler Spannung, die zwischen die erste und die zweite Elektrode geschaltet ist, um die Spannung zwischen diesen als eine Funktion der Zeit steuerbar zu verändern; und
eine Mehrzahl von groben Zeitverzögerungseinrichtungen (43, 45, 47, 49), wobei eine solche Einrichtung jedem piezoelektrischen Kristall zugeordnet ist und mit dem ersten Wandler oder mit dem zweiten Wandler des zugeordneten Kristalls verbunden ist, um das ankommende Signal zu empfangen, und um eine steuerbare große Zeitverzögerung $\Delta t_L = M \Delta t_C$ einzufügen, wobei M eine nicht negative ganze Zahl ist und $\Delta t_C$ ein vorbestimmtes Zeitinkrement ist.

12. Vorrichtung nach Anspruch 11, bei der das piezoelektrische Kristallmaterial (31) eine ferroelektrische Keramik ist.

13. Vorrichtung gemäß Anspruch 12, bei der das ferroelektrische Keramikmaterial (31) aus der Klasse ausgewählt ist, die aus Bleizirkonattitanat und Bleititanat besteht.

14. Ein Verfahren zum Empfangen und Verarbeiten eines ankommenden akustischen Breitbandsignals, wobei das Verfahren folgende Schritte aufweist:
Bereitstellen eines Arrays von zwei oder mehr Empfängern (13), die in einem Array angeordnet sind, so daß jeder Empfänger das ankommende Signal (10), das ein Bild darstellt, empfängt und erfaßt;
Einfügen einer getrennt bestimmten und steuerbaren Zeitverzögerung (17) in das Bildsignal, das an jedem Empfänger empfangen wird, wobei die Zeitverzögerung durch die relative Position eines Empfängers in dem Array der Empfänger bestimmt ist; und
Bereitstellen einer Signalsummierungseinrichtung (21), um jedes der zeitverzögerten ankommenden Signale zu empfangen, und um die Summe dieser Signale als ein elektrisches Signal zu bilden und auszugeben;
dadurch gekennzeichnet,
daß die Zeitverzögerung aus einer Summe eines großen Zeitverzögerungsinkrements $\Delta t_L = M \Delta t_C$ (M = 0, 1, 2, ...), wobei $\Delta t_C$ ein vorbestimmtes Zeitinkrement ist, plus eines kontinuierlich veränderlichen kleinen Zeitverzögerungsinkrement $\Delta t_S$, das die Bedingung $0 \leq \Delta t_S \leq (\Delta t_S)_{max}$ erfüllt, besteht.

**Revendications**

1. Dispositif pour recevoir et traiter un signal acoustique large bande entrant, le dispositif comprenant:
un réseau de deux récepteurs de signaux ou plus (13), disposés en un réseau de façon à ce que chaque récepteur reçoive et détecte le signal entrant (10) représentant une image;
des moyens de retard temporel (17) connectés à chacun des récepteurs de signaux (13), pour introduire un retard temporel déterminé séparément dans le signal entrant reçu par chaque récepteur de signaux et pour modifier un retard temporel, à un instant prédéterminé après qu'un signal entrant (10) ait été reçu par le récepteur de signaux correspondant, sachant que le retard temporel pour chaque récepteur est déterminé par la position relative du récepteur dans le réseau de récepteurs;

des moyens de sommation de signaux (21) connectés au moyens de retard temporel (17), pour recevoir chaque signal de la pluralité de signaux entrants (19) avec des retards temporels déterminés séparément qui sont introduits dans ceux-ci et pour former la somme de ces signaux; et

un détecteur de signaux (21) connecté aux moyens de sommation de signaux, pour recevoir la somme des signaux et pour détecter cette somme et présenter la somme sous la forme d'un signal électrique, caractérisé en ce que les moyens de retard temporel introduisent un retard temporel commandé important $\Delta t_L = M\Delta t_C$ (M = 0, 1, 2, ...), où $\Delta t$ est un incrément temporel prédéterminé, plus un faible retard temporel variant de manière continue $\Delta t_S$ qui satisfait la condition $0 \leq \Delta t_S \leq (\Delta t_S)_{max}$.

2. Dispositif selon la revendication 1, dans lequel ledit réseau desdits récepteurs de signaux (13) est un réseau à une dimension desdits récepteurs disposés approximativement en une ligne droite, l'écartement de deux récepteurs adjacents quelconques étant approximativement partout le même.

3. Dispositif selon la revendication 2, dans lequel ledit écartement a desdits deux récepteurs de signaux adjacents (13) est déterminé approximativement par $a = v/2f$, où v est la vitesse de propagation dudit signal entrant avant que ledit signal entrant n'atteigne lesdits récepteurs de signaux.

4. Dispositif selon la revendication 1, dans lequel ledit réseau desdits récepteurs de signaux (13) est un réseau plan bidimensionnel, le plan dudit réseau ayant un système de coordonnées cartésiennes bidimensionnelles (x, y), au moins un groupe desdits récepteurs de signaux étant situé le long d'une ligne x = constante dans le plan et au moins un second groupe desdits récepteurs de signaux étant situé le long d'une ligne y = constante dans le plan.

5. Dispositif selon la revendication 4, dans lequel l'écartement de deux récepteurs de signaux adjacents quelconques (13) sur l'une desdites lignes x = constante est approximativement partout le même.

6. Dispositif selon la revendication 4, dans lequel ledit écartement desdits deux récepteurs de signaux adjacents (13) sur l'une desdites lignes x = constante est déterminé approximativement par $a = v/2f$, où v est la vitesse de propagation dudit signal entrant avant que ledit signal entrant n'atteigne lesdits récepteurs de signaux.

7. Dispositif selon la revendication 1, dans lequel lesdits moyens de retard temporel comprennent:

une pluralité de cristaux piézo-électriques (31) avec une vitesse du son qui dépend d'une tension, un tel cristal étant connecté à chacun desdits récepteurs de signaux (13) et l'ensemble de ces cristaux ayant approximativement la même longueur $L_1$ dans une première direction du cristal;

des premier et second transducteurs (33, 35) pour chaque cristal afin de convertir un signal acoustique en un signal électrique et convertir un signal électrique en un signal acoustique, les deux transducteurs étant situés à des extrémités opposées du cristal le long d'une ligne dans le cristal orientée dans une première direction du cristal, sachant qu'un signal acoustique entrant (10) est reçu par le premier transducteur, se propage sur la longueur $L_1$ du cristal dans la première direction du cristal et est reçu et délivré par le second transducteur;

des première et seconde électrodes (37, 39) pour chaque cristal afin de commander le faible retard temporel $\Delta t_S$ associé à la propagation d'un signal d'une première extrémité du cristal à l'autre extrémité dans la première direction du cristal, la première électrode et la seconde électrode étant situées sur des côtés opposés du cristal le long d'une ligne orientée dans une seconde direction du cristal qui est approximativement perpendiculaire à la première direction du cristal;

une source de tension (41), à tension variable, connectée entre les première et seconde électrodes pour faire varier de manière commandée la tension entre celles-ci en fonction du temps; et

une pluralité de moyens de retard temporel approximatif (43, 45, 47, 49), un tel moyen étant associé à chaque cristal piézo-électrique et étant connecté au premier transducteur ou au second transducteur du cristal associé, pour recevoir ledit signal entrant et pour introduire ledit retard temporel important pouvant être commandé de $\Delta t_L = M\Delta t_C$.

8. Dispositif selon la revendication 7, dans lequel ledit matériau de cristal piézo-électrique (31) est une céramique ferro-électrique.

9. Dispositif selon la revendication 8, dans lequel ledit matériau de céramique ferro-électrique (31) est pris dans la classe comprenant l'étain zirconate titanate ou l'étain titanate.

10. Dispositif selon la revendication 1, dans lequel ledit retard temporel important $\Delta t_L$ est approximativement un multiple entier de 50 ns et ledit faible retard temporel $(\Delta t_S)$ n'est pas inférieur à 1 ns.

**11.** Dispositif de retard temporel pour introduire un retard temporel entre deux signaux acoustiques ou plus se propageant suivant des chemins de signal séparés, le dispositif comprenant:

une pluralité de cristaux piézo-électriques (31) avec une vitesse du son qui dépend d'une tension, un tel cristal étant connecté à chacun des chemins de signal et l'ensemble de ces cristaux ayant approximativement la même longueur $L_1$ dans une première direction du cristal;

des premier et second transducteurs (33, 35) pour chaque cristal afin de convertir un signal acoustique en un signal électrique et convertir un signal électrique en un signal acoustique, les deux transducteurs étant situés à des extrémités opposées du cristal le long d'une ligne dans le cristal orientée dans une première direction du cristal, sachant qu'un signal acoustique entrant (10) est reçu par le premier transducteur, se propage sur la longueur $L_1$ du cristal dans la première direction du cristal et est reçu et délivré par le second transducteur;

des première et seconde électrodes (37, 39) pour chaque cristal afin de commander un faible retard temporel associé à la propagation d'un signal d'une première extrémité du cristal à l'autre extrémité dans une première direction du cristal, la première électrode et la seconde électrode étant situées sur des côtés opposés du cristal le long d'une ligne orientée dans une seconde direction du cristal qui est approximativement perpendiculaire à la première direction du cristal;

une source de tension (41), à tension variable, connectée entre les première et seconde électrodes pour faire varier de manière commandée la tension entre celles-ci en fonction du temps; et

une pluralité de moyens de retard temporel approximatif (43, 45, 47, 49), un tel moyen étant associé à chaque cristal piézo-électrique et étant connecté au premier transducteur ou au second transducteur du cristal associé, pour recevoir ledit signal entrant et pour introduire un retard temporel important pouvant être commandé de $\Delta t_L = M \Delta t_C$, où M est un entier non négatif et $\Delta t_C$ est un incrément temporel prédéterminé.

**12.** Dispositif selon la revendication 11, dans lequel ledit matériau de cristal piézo-électrique (31) est une céramique ferro-électrique.

**13.** Dispositif selon la revendication 12, dans lequel ledit matériau de céramique ferro-électrique (31) est pris dans la classe comprenant l'étain zirconate titanate et l'étain titanate.

**14.** Procédé pour recevoir et traiter un signal acoustique large bande entrant, le procédé comprenant les étapes consistant à:

fournir un réseau de deux récepteurs ou plus (13), disposés en un réseau de façon à ce que chaque récepteur reçoive et détecte le signal entrant (10) représentant une image;

introduire un retard temporel déterminé séparément et pouvant être commandé (17) dans le signal d'image reçu par chaque récepteur, sachant que le retard temporel est déterminé par la position relative d'un récepteur dans le réseau de récepteurs; et

fournir des moyens de sommation de signaux (21) pour recevoir chacun des signaux de retard temporel entrants et pour former et délivrer la somme de ces signaux sous la forme d'un signal électrique; caractérisé en ce que le retard temporel

comprend une somme d'un incrément de retard temporel important $\Delta t_L = M \Delta t_C$ (M = 0, 1, 2, ...), où $\Delta t_C$ est un incrément temporel prédéterminé, plus un incrément de faible retard temporel variant de manière continue $\Delta t_S$ qui satisfait la condition $0 \leq \Delta t_S \leq (\Delta t_S)_{max}$.

FIG-1

FIG.-2

WAVE
FRONT

θ ≈ 90°

FIG.-3

INCOMING WAVES

FIG.-4